# DEMANDE DE BREVET EUROPEEN

(11) **EP 1 767 574 A1**
(43) Date de publication de la demande: **28.03.2007**
(21) Numéro de dépôt: 06121272.6
(22) Date de dépôt: 26.09.2006
(51) Int. Cl.: C08L 3/02, C08J 3/215, C06B 21/00, C06B 29/22, C06B 31/30

(54) **Procédé de fabrication de compositions énergétiques comprenant des nanoparticules d'un élément ou composé chimique dispersées dans une matrice organique**

(30) Priorité: 26.09.2005 FR 0552858
(71) Demandeur: Commissariat à l'Energie Atomique, 75015 Paris (FR)
(72) Inventeur: Sourdiaucourt, Carole, 37170, Chambray les Tours (FR); Wuillaume, Anne, 37000, Tours (FR); Comet, Marc, 68330, Huningue (FR); Beaucamp, Arnaud, 37260, Monts (FR); Besnard, Olivier, 37250, Veigne (FR)
(74) Mandataire: Poulin, Gérard

(57) **Abrégé**

L'invention se rapporte à un procédé de fabrication d'une composition énergétique, utile notamment comme explosif ou propergol, comprenant des nanoparticules d'au moins un élément ou composé chimique dispersées dans une matrice organique, qui comprend les étapes suivantes :
a) mélanger l'élément ou composé chimique et au moins un polymère organique dans un solvant dans lequel cet élément ou composé chimique et ce polymère organique sont tous les deux solubles, pour obtenir une solution vraie ou une solution colloïdale contenant à la fois ledit élément ou composé chimique et ledit polymère organique ; puis
b) éliminer le solvant de ladite solution vraie ou colloïdale.

## Description

### DOMAINE TECHNIQUE

La présente invention se rapporte à un procédé de fabrication de compositions énergétiques comprenant des nanoparticules d'un élément ou composé chimique dispersées dans une matrice organique.

Ce procédé permet de nanostructurer, c'est-à-dire de structurer à une échelle nanométrique, des éléments et des composés chimiques de nature très diverse (métaux, sels minéraux, composés purement organiques, d'origine naturelle ou synthétique, composés organométalliques) tout en les dispersant de façon homogène au sein d'une matrice organique.

Il est susceptible de trouver de nombreuses applications dans le domaine de la pyrotechnie pour la fabrication de compositions énergétiques, utiles notamment comme explosifs, et en particulier comme explosifs industriels, ou bien comme propergols, telles que :
* des compositions formées de nanoparticules d'un agent oxydant dispersées dans une matrice réductrice ;
* des compositions formées de nanoparticules d'un agent réducteur dispersées dans une matrice oxydante ;
* des compositions formées de nanoparticules d'un explosif intrinsèque comprenant des groupements explosophores, dispersées dans une matrice inerte ou réactive ; ou encore
* des compositions formées de nanoparticules d'un matériau inerte propre à servir d'initiateur de "*point chaud*" tel que défini par Bowden F.P. et A.D. Yoffe (Initiation and Growth of Explosives in Liquids and Solids, 1952, Cambridge University Press), dans une matrice réactive.

### ÉTAT DE LA TECHNIQUE ANTÉRIEURE

Les compositions énergétiques utilisées comme explosifs ou comme propergols comprennent typiquement un agent oxydant et un agent réducteur qui sont destinés à réagir l'un avec l'autre dans une réaction d'oxydoréduction pour libérer violemment une très grande quantité d'énergie.

L'agent oxydant et l'agent réducteur peuvent être représentés par deux groupes chimiques différents portés par un même composé ou bien par deux composés distincts.

Dans ce dernier cas, on sait que, plus la surface de contact entre l'agent oxydant et l'agent réducteur est importante, plus la réaction d'oxydoréduction est rapide et plus les performances détoniques de la composition énergétique sont élevées.

Il a été proposé, dans le brevet américain n° 4,758,289 [1], de réaliser un explosif sous la forme de microcapsules mesurant de l'ordre de 10 à 1000 microns et dans lesquelles l'agent oxydant est enrobé d'un film de 1 à 20 microns d'épaisseur renfermant l'agent réducteur.

Dans ce document, l'encapsulation de l'agent oxydant est destinée, non seulement à augmenter la surface de contact entre cet agent et l'agent réducteur par rapport à celle obtenue lorsque ces agents sont simplement mélangés l'un à l'autre, mais également à conférer à l'explosif une résistance à l'eau.

De ce fait, l'agent oxydant est dispersé en solution concentrée ou à l'état fondu sous forme de gouttelettes dans un mélange liquide apte à durcir ultérieurement et dans lequel se trouve l'agent réducteur. Il se forme ainsi une coquille autour des gouttelettes qui a à la fois un rôle de protecteur et d'agent réducteur.

Plus récemment, il a été proposé, dans la demande internationale PCT WO 99/12870 [2] d'élaborer, via des procédés sol-gel, des compositions énergétiques constituées de particules, non plus de taille micrométrique, mais de taille nanométrique, dispersées dans une matrice.

Sont ainsi envisagées dans ce document trois voies de synthèse différentes :
- une première voie qui consiste à faire cristalliser un explosif intrinsèque (hexogène ou pentrite) dans les pores d'une matrice inerte (silice) en ajoutant cet explosif en solution au sol puis en remplaçant la phase liquide du gel résultant de la gélification du sol par un solvant dans lequel ledit explosif est insoluble (éthanol) ;
- une deuxième voie qui consiste à incorporer des particules déjà nanostructurées d'un explosif intrinsèque (hexogène ou pentrite) dans les pores d'une matrice inerte (silice) en dispersant une poudre de cet explosif dans le sol avant sa gélification ; et
- une troisième voie qui consiste à disperser des particules d'un agent oxydant (nitrate d'ammonium) dans les pores d'une matrice réductrice en polycondensant du résorcinol et du formaldéhyde au sein d'une solution aqueuse d'agent oxydant utilisée comme diluant et milieu réactionnel au cours de la synthèse du gel.

Les compositions énergétiques obtenues via ces procédés sol-gel présentent, d'une manière générale, le défaut de ne pas être compactes en raison du volume poreux laissé vacant par la phase liquide du gel lorsque celle-ci est éliminée lors de la transformation du gel en aérogel ou en xérogel.

De plus, la seconde voie de synthèse précédemment mentionnée ne permet pas d'obtenir une répartition homogène des nanoparticules dans la matrice hôte, tandis que la troisième voie de synthèse conduit nécessairement à des matériaux de porosité résiduelle élevée, dans la mesure où la quantité d'eau utilisée n'est pas négligeable au regard des masses des autres réactifs.

Les Inventeurs se sont donc fixé pour but de fournir un procédé qui permette de nanostructurer une espèce chimique au sein d'une autre espèce chimique formant matrice autour d'elle et qui soit exempt des inconvénients présentés par le procédé sol-gel utilisé dans WO-A-99/12870 de manière à ce que ce procédé soit parfaitement adapté à la fabrication de compositions énergétiques, et notamment de compositions comprenant un agent oxydant et un agent réducteur sous la forme de deux composés distincts.

Les Inventeurs se sont de plus fixé pour but que ce procédé permette de nanostructurer aussi bien un composé de structure chimique complexe qu'un composé de structure chimique simple comme, par exemple, un sel minéral, ou un élément chimique comme un métal.

Les Inventeurs se sont encore fixé pour but que ce procédé soit simple à mettre en oeuvre et ne nécessite pas d'équipements complexes et onéreux de sorte à ce qu'il soit compatible avec une exploitation à une échelle industrielle.

### EXPOSÉ DE L'INVENTION

Ces buts, et d'autres encore, sont atteints par un procédé de fabrication d'une composition énergétique comprenant des nanoparticules d'au moins un élément ou composé chimique dispersées dans une matrice organique, qui est caractérisé en ce qu'il comprend les étapes suivantes :
a) mélanger l'élément ou composé chimique et au moins un polymère organique dans un solvant dans lequel cet élément ou composé chimique et ce polymère organique sont tous les deux solubles, pour obtenir une solution vraie ou une solution colloïdale contenant à la fois ledit élément ou composé chimique et ledit polymère organique ; puis
b) éliminer le solvant de ladite solution vraie ou colloïdale.

Ainsi, dans le procédé selon l'invention, on choisit, pour former la matrice organique dans laquelle l'élément ou composé chimique est destiné à être nanostructuré, un polymère organique (ou un mélange de polymères organiques) qui présente la caractéristique d'être soluble dans au moins un des solvants dans lequel ledit élément ou composé chimique est également soluble, et l'on choisit ce solvant ou l'un de ces solvants pour former une solution vraie ou une solution colloïdale contenant à la fois l'élément ou composé chimique et le polymère organique.

L'élimination ultérieure du solvant de cette solution conduit à un accroissement progressif de la viscosité du milieu, puis au passage à l'état solide de l'élément ou composé chimique. Celui-ci passe ainsi à l'état de particules dont la taille est limitée d'un point de vue stérique par les chaînes moléculaires du polymère organique. On obtient de la sorte une composition solide et qui est formée d'une matrice organique cohésive au sein de laquelle sont dispersées de manière homogène des particules nanométriques de l'élément ou composé chimique.

Dans le cadre de l'invention, le terme *"nanoparticules"* désigne des particules qui peuvent être de forme quelconque, mais dont la plus grande dimension va de 1 nanomètre à 1 micron.

L'expression "*élément chimique*" désigne un élément du tableau périodique des éléments chimiques, encore connu sous le nom de tableau de Mendeleïev, tandis que l'expression "*composé chimique*" désigne une molécule ou un composé ionique formé d'au moins deux éléments chimiques différents.

L'expression "*polymère organique*" désigne, quant à elle, aussi bien un composé organique formé par l'enchaînement d'un seul et même motif répétitif (c'est-à-dire, un polymère au sens strict du terme) qu'un composé organique formé par l'enchaînement de plusieurs motifs répétitifs différents (c'est-à-dire, un copolymère).

Par ailleurs, on considère qu'un élément ou composé chimique, ou qu'un polymère organique est soluble dans un solvant lorsqu'il est apte à former une solution vraie ou une solution colloïdale avec ce solvant. On parle de solution vraie lorsque le soluté est une molécule de petite taille, alors qu'on parle plutôt de solution colloïdale lorsque le soluté est une macromolécule (taille de 5 à 1000 nm ; cf. Kirk-Othmer Concise Encyclopedia of Chemical Technology, 1985, Wiley-Interscience, [3]).

Conformément à l'invention, le solvant peut être de l'eau, un solvant organique, un mélange d'eau et d'un solvant organique miscible à l'eau (par exemple, un mélange eau/éthanol) ou encore un mélange de solvants organiques miscibles entre eux.

Le polymère organique peut être un polymère naturel ou un polymère de synthèse, l'essentiel étant qu'il soit capable de former une solution vraie ou une solution colloïdale avec le solvant choisi.

Ainsi, le polymère organique peut notamment être choisi parmi :
- les polysaccharides et les polymères qui en dérivent, par exemple par fonctionnalisation chimique par des groupes fonctionnels comme des groupes azotés, oxygénés, soufrés, phosphorés ou contenant un métal de transition ;
- les protéines et les polymères qui en dérivent, par exemple par hydrolyse comme les gélatines, et qui sont susceptibles de donner des gels en milieu aqueux ;
- les polymères solubles dans l'eau et qui ne sont ni de nature polysaccharidique ni de nature protéinique comme les polyvinylpyrrolidones, les polyéthylène glycols, les polypropylène glycols, les polymères résultant de l'estérification de l'acide citrique par l'éthylène glycol, les poly(oxyde d'éthylène), les poly(oxyde de propylène), les poly(alcool vinylique) et leurs copolymères ;
- les résines solubles dans l'eau comme celles obtenues par dégradation thermique partielle de l'acide citrique ; et
- les polymères thermoplastiques solubles dans les solvants organiques comme les polyéthylènes, les polypropylènes, les polyesters, les polyamides et les polyvinylbutyrals.

Parmi les polymères organiques précités, on préfère tout particulièrement les polysaccharides.

En effet, outre que ces polymères se sont révélés être d'excellents agents structurants en milieu aqueux, ils présentent l'avantage d'être abondants dans la nature, indéfiniment renouvelables (grâce à la photosynthèse), et non toxiques pour l'homme et l'environnement.

De plus, non seulement ils sont aptes à servir d'agents réducteurs dans des compositions énergétiques, mais ils conviennent particulièrement bien à la réalisation de compositions de ce type dans la mesure où :
- ils sont connus pour les bonnes caractéristiques énergétiques des explosifs intrinsèques qui en dérivent comme la nitrocellulose et le nitroamidon ;
- leur oxygénation partielle, liée à leur formule générale CₙH₂ₙ₋₂Oₙ₋₁, permet de limiter la quantité d'oxydant nécessaire à la gazéification totale des compositions ;
- leur densité est élevée (à titre d'exemple, celle de l'amidon de maïs est de l'ordre de 1 à 2 g/cm⁻³), ce qui est essentiel pour obtenir des matériaux à haute densité d'énergie ; et
- leur température de décomposition par oxydation (combustion) est relativement élevée (> 200°C).

Les polysaccharides utiles selon l'invention peuvent former avec l'eau soit des solutions vraies (amidon hydrolysé), soit des solutions colloïdales (amidon naturel, hydroxypropylméthylcellulose, ...), ou ils peuvent être insolubles dans l'eau comme la cellulose. Ils peuvent, par ailleurs, provenir de différentes sources naturelles comme les graines, les tubercules, les racines, les fruits (pectine) et les algues (carraghénanes, xanthanes), ou être issus d'un procédé d'élaboration partiellement ou totalement artificiel. Ils peuvent aussi provenir de déchets tels que les chips d'emballage en amidon de maïs.

Parmi les polysaccharides, on préfère utiliser un amidon et, tout particulièrement, un amidon formant une solution colloïdale avec l'eau.

D'autres polymères, qui se sont également révélés être très avantageux, sont ceux issus de l'estérification de l'acide citrique par l'éthylène glycol. Ces polymères, qui sont aptes à servir d'agents réducteurs, peuvent notamment être obtenus comme décrit par Arnaudov et al., Analytical Laboratory, 7:2, 70-84, 1998 [4] et par Montemayor et al., Materials Letters, 59, 1056-1060, 2000 [5].

Conformément à l'invention, le mélange de l'élément ou composé chimique et du polymère organique dans le solvant est de préférence réalisé :
- en dissolvant le polymère organique dans le solvant ; puis
- en ajoutant, à la solution ainsi obtenue, l'élément ou composé chimique, éventuellement sous la forme d'une solution préalablement préparée par dissolution de cet élément ou composé chimique dans ledit solvant.

Toutefois, il est également possible de procéder différemment et notamment de dissoudre, dans un premier temps, l'élément ou composé chimique dans le solvant, puis d'ajouter, à la solution ainsi obtenue, le polymère organique, éventuellement sous la forme d'une solution préalablement préparée par dissolution de ce polymère dans ledit solvant.

Par ailleurs, le solvant est, de préférence, éliminé par évaporation et, mieux encore, par évaporation sous vide, cette technique permettant, en effet, d'éliminer rapidement le solvant, c'est-à-dire, en pratique, dans un délai de quelques minutes à quelques heures selon le volume de solvant utilisé et sa volatilité.

Cependant, d'autres méthodes d'extraction du solvant peuvent être utilisées comme, par exemple, la distillation ou la lyophilisation.

Conformément à l'invention, la fraction massique de l'élément ou composé chimique dans la composition peut être égale à n'importe quelle valeur située entre 0% et 100%, seules ces deux dernières valeurs étant exclues. De préférence, cette fraction massique se situe dans la gamme allant de 5% à 95%, de manière à éviter que l'élément ou composé chimique ne précipite ou ne cristallise à l'extérieur de la matrice organique.

Outre les avantages déjà mentionnés, le procédé selon l'invention présente aussi celui de permettre la nanostructuration d'éléments ou composés chimiques de nature très diverse (minérale, organique ou organométallique), et en particulier celle d'éléments ou composés chimiques vulnérables d'un point de vue thermique.

Ainsi, par exemple, dans le cadre de la fabrication de composition énergétiques, il peut être utilisé pour nanostructurer :
- un agent oxydant dans une matrice réductrice, l'agent oxydant pouvant être choisi parmi les sels métalliques, organiques ou organométalliques d'espèces oxydantes comme les composés oxygénés de l'azote (nitrates tels que le nitrate d'ammonium, nitrites tels que le dinitramidure d'ammonium, ...), les composés oxygénés des halogènes (chlorates tels que le chlorate de potassium, perchlorates tels que le perchlorate d'ammonium, bromates tels que le bromate de potassium, ...), les composés oxygénés du chrome et du manganèse (bichromates tels que le bichromate d'ammonium, permanganates tels que le permanganate de potassium, ...), et parmi les peroxydes organiques tels que les peroxydes de cétone, et les peroxydes inorganiques ;
- un agent réducteur dans une matrice oxydante, cet agent réducteur pouvant être choisi parmi les métaux fortement électropositifs (comme Be, Mg, Al, Zn et Zr) et toutes les substances ioniques ou moléculaires contenant des atomes de numéro atomique inférieur à Z = 18 (à savoir, H, B, C, N, F, Cl, S, P) et dont l'oxydation partielle ou totale est susceptible de générer des gaz ;
- un explosif intrinsèque dans une matrice inerte ou réactive, cet explosif intrinsèque pouvant être choisi parmi les substances renfermant des groupements explosophores comme NO₂, ONO₂, NO, N-NO₂, N=N, N=N=N, N-halogène, N-soufre, N=C, OClO₂, OClO₃, O-O, O-O-O, C=C, C-métal, et pouvant se décomposer d'elles-mêmes de manière explosive sous l'influence d'une initiation appropriée (nitramines tels que le HMX ou le RDX, esters nitriques tels que la pentrite, ...) ; ou encore
- un matériau inerte propre à servir d'initiateur de "*point chaud*" dans une matrice réactive, ce matériau pouvant être choisi parmi les corps minéraux cristallisés ou amorphes (verres) habituellement considérés comme inertes d'un point de vue chimique ou thermique tels que les oxydes, les chalcogénures, les nitrures, les métaux réfractaires et les sels stables.

Le procédé selon l'invention présente encore l'avantage d'être très simple à mettre en oeuvre et d'offrir la possibilité, dans le cas de l'utilisation d'un polymère naturel comme l'amidon en tant que matériau constitutif de la matrice, de valoriser des déchets tels que les chips d'emballage en amidon de maïs qui sont de fort encombrement et ne sont actuellement pas réutilisés.

Conformément à l'invention, l'élément ou composé chimique est préférentiellement un agent oxydant, tandis que le polymère organique est préférentiellement un agent réducteur.

L'agent oxydant peut être choisi parmi l'ensemble des agents oxydants précités, le nitrate d'ammonium et le perchlorate d'ammonium étant particulièrement préférés.

Par ailleurs, pour les raisons précédemment mentionnées, l'agent réducteur est avantageusement un polysaccharide, en particulier un amidon et, de préférence, un amidon formant une solution colloïdale avec l'eau.

En variante, l'agent réducteur est un polymère résultant de l'estérification de l'acide citrique par l'éthylène glycol.

D'autres avantages et caractéristiques du procédé selon l'invention apparaîtront à la lecture du complément de description qui suit et qui se réfère à des exemples de mise en oeuvre de ce procédé.

Bien entendu, ces exemples ne sont donnés qu'à titre d'illustrations de l'objet de l'invention et ne constituent en aucun cas une limitation de cet objet.

### BRÈVE DESCRIPTION DES FIGURES

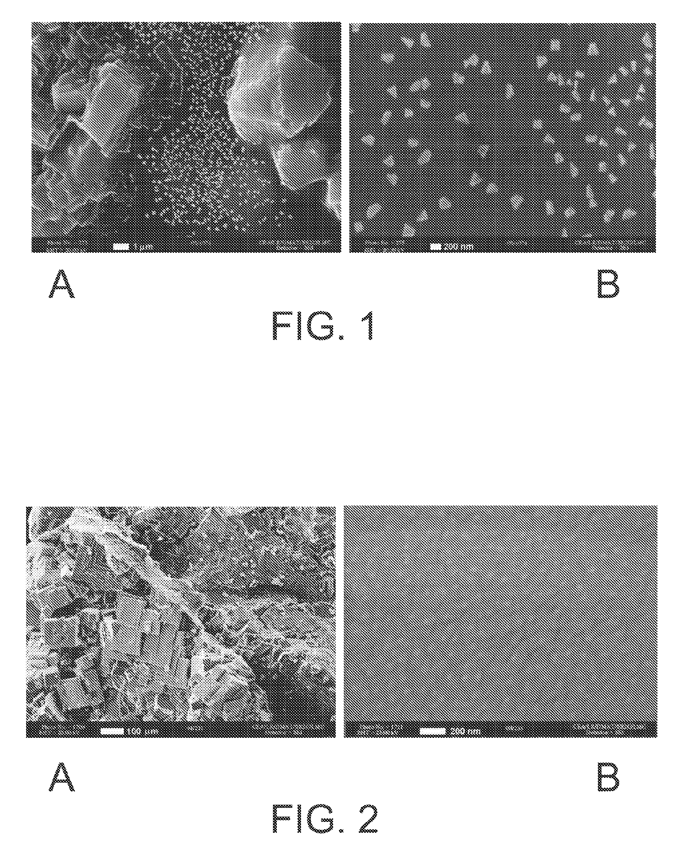

La figure 1, parties A et B, illustre deux images prises au microscope électronique à balayage, à des grandissements respectivement de 4000X pour la partie A et de 15000X pour la partie B, d'une composition obtenue selon l'invention, par dispersion de chlorure de sodium dans une matrice d'amidon.
La figure 2, parties A et B, illustre deux images prises au microscope électronique à balayage, à des grandissements respectivement de 60X pour la partie A et de 35000X pour la partie B, d'une composition obtenue selon l'invention, par dispersion de chlorure de sodium dans une matrice d'amidon, en utilisant un autre type d'amidon.

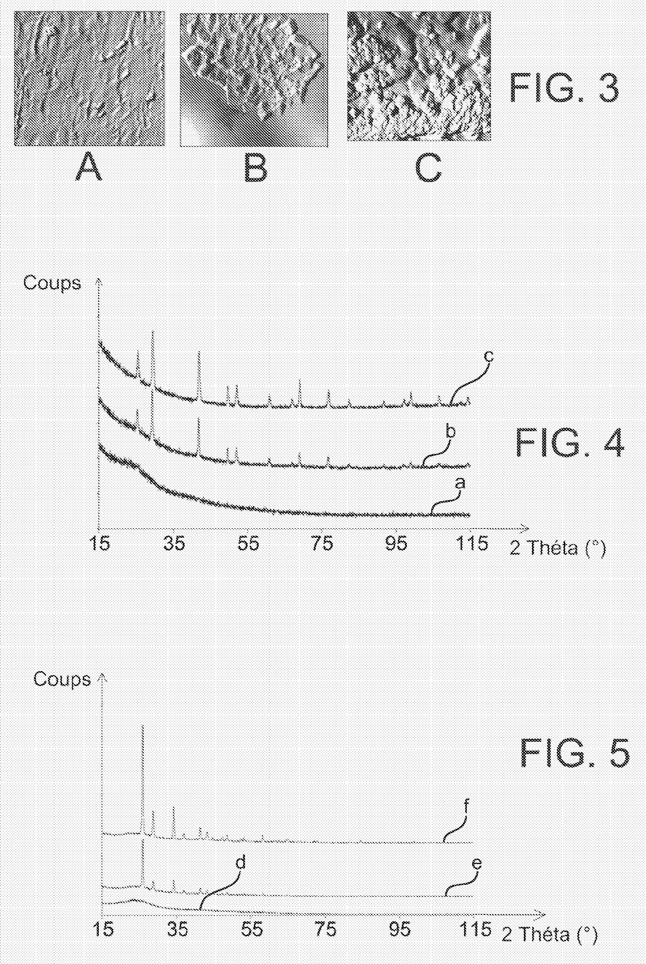

La figure 3, parties A, B et C, illustre trois images prises au microscope à force atomique, à des résolutions respectivement de 7200X pour les parties A et C et de 2400X pour la partie B, de compositions obtenues selon l'invention, par dispersion de chlorure de sodium dans une matrice d'amidon, en utilisant différentes fractions massiques de NaCl, la partie A correspondant à une composition obtenue avec une fraction massique de 9%, la partie B correspondant à une composition obtenue avec une fraction massique de 50% et la partie C correspondant à une composition obtenue avec une fraction massique de 95%.
La figure 4 illustre les diffractogrammes de rayons X sur poudre enregistrés pour des compositions obtenues selon l'invention, par dispersion d'iodure de potassium dans une matrice d'amidon, en utilisant différentes fractions massiques d'iodure de potassium, le diffractogramme (a) correspondant à une composition obtenue avec une fraction massique de 20%, le diffractogramme (b) correspondant à une composition obtenue avec une fraction massique de 40% et le diffractogramme (c) correspondant à une composition obtenue avec une fraction massique de 60%.
La figure 5 illustre les diffractogrammes de rayons X sur poudre enregistrés pour des compositions obtenues selon l'invention, par dispersion d'urée dans une matrice d'amidon, en utilisant différentes fractions massiques d'urée, le diffractogramme (d) correspondant à une composition obtenue avec une fraction massique de 20%, le diffractogramme (e) correspondant à une composition obtenue avec une fraction massique de 40% et le diffractogramme (f) correspondant à une composition obtenue avec une fraction massique de 60%.

### EXPOSÉ DÉTAILLÉ DE MODES DE MISE EN OEUVRE PARTICULIERS

### Exemple 1 : Dispersion de chlorure de sodium

### 1. Dispersion de chlorure de sodium dans une matrice d'amidon issu de chips d'emballage :

On solubilise 0,6 g d'amidon se présentant sous la forme de chips d'emballage dans 60 mL d'eau portée à ébullition pour obtenir une solution colloïdale d'amidon.

On ajoute à cette solution 20 mL d'une solution aqueuse contenant 3,5 g de chlorure de sodium de sorte à obtenir une fraction massique de NaCl de 85% dans le mélange résultant.

Puis, on élimine l'eau de ce mélange par évaporation dans un ballon en rotation (150 tours/min) à 75°C et sous pression réduite (20 < P < 100 mbar).

La composition ainsi obtenue est analysée par microscopie électronique à balayage (MEB).

Comme visible sur la partie A de la figure 1, qui correspond à une première image MEB de cette composition, prise à un grandissement de 4000X, l'utilisation d'une proportion élevée de NaCl (85% de la masse totale de la composition) induit la formation de particules micrométriques (Φ ≈ 5 µm) en dehors de la matrice d'amidon.

En revanche, comme visible sur la partie B de la figure 1, qui correspond à une autre image MEB de la composition, prise à un grandissement de 15000X, les particules qui se sont formées dans la matrice d'amidon sont, elles, nanométriques (100 < Φ < 200 nm) et de forme tétraédrique.

Une estimation de la taille moyenne des cristallites de NaCl formant ces nanoparticules par la méthode de Debye-Scherrer (ou méthode des poudres), montre que ces cristallites mesurent en moyenne de l'ordre de 50 nm.

### 2. Influence du type de solubilité du polymère constitutif de la matrice :

Afin d'étudier l'influence du type de solubilité présenté par le polymère constitutif de la matrice sur les particules obtenues, on prépare une composition en procédant comme décrit au point 1 ci-avant, mais en remplaçant l'amidon de chips d'emballage par l'amidon commercialisé par la société PROLABO sous l'appellation "*amidon soluble"* ([CAS]= 9005-25-8) qui forme, lui, une solution vraie avec l'eau.

Puis, on observe cette composition au MEB.

Comme le montre la partie A de la figure 2, qui correspond à une première image MEB de la composition, prise à un grandissement de 60X, l'utilisation d'un amidon formant une solution vraie soluble dans l'eau se traduit par un phénomène d'exocristallisation plus prononcé que celui observé pour l'utilisation d'un amidon issu de chips d'emballage, avec la formation de microparticules de taille supérieure à 100 µm.

Toutefois, comme visible sur la partie B de la figure 2, qui correspond à une autre image MEB de la composition, prise à un grandissement de 35000X, des nanoparticules de NaCl (Φ ≈ 40 nm) se sont également formées dans la matrice d'amidon.

Une estimation de la taille moyenne des cristallites de NaCl formant ces nanoparticules par la méthode de Debye-Scherrer montre que ces cristallites mesurent en moyenne plus de 100 nm.

### 3. Influence de la teneur en chlorure de sodium :

Afin d'étudier l'influence de la teneur en NaCl sur les particules obtenues, on prépare trois compositions en procédant comme décrit au point 1 ci-avant, mais en utilisant des quantités d'amidon, de chlorure de sodium et d'eau permettant d'obtenir des fractions massiques de NaCl respectivement de 9%, 50% et 90%.

Comme le montrent les parties A, B et C de la figure 3, qui correspondent à trois images prises au microscope à force atomique, à des résolutions respectivement de 7200X pour les parties A et C et de 2400X pour la partie B, des compositions ainsi obtenues, des nanoparticules de NaCl se sont formées dans chacune d'elles.

Ces nanoparticules présentent un diamètre moyen de 254 nm dans la composition la plus pauvre en NaCl (partie A), tandis qu'elles présentent un diamètre plus élevé mais toujours inférieur à 1 µm dans les deux autres compositions (parties B et C).

### Exemple 2 : Dispersion d'iodure de potassium et d'urée

Un protocole opératoire analogue à celui décrit dans l'exemple 1, point 1, ci-avant peut aisément être utilisé pour nanostructurer des composés chimiques très solubles dans l'eau tels que l'iodure de potassium (KI) et l'urée ((NH₂)₂CO), dans une matrice d'amidon.

Ainsi, par exemple, après avoir solubilisé de l'amidon de chips d'emballage dans de l'eau portée à ébullition pour obtenir une solution colloïdale, on ajoute une solution vraie d'iodure de potassium ou d'urée, en utilisant des quantités d'amidon, d'iodure de potassium ou d'urée et d'eau permettant d'obtenir des fractions massiques d'iodure de potassium ou d'urée respectivement de 20%, 40% et 60%.

Puis, on élimine l'eau des mélanges résultants par évaporation dans un ballon en rotation (150 tours/min) à 75°C sous un vide d'environ 50 mbar.

Les compositions ainsi obtenues sont analysées par diffraction des rayons X sur poudre.

La figure 4 illustre les diffractogrammes enregistrés pour les compositions renfermant de l'iodure de potassium, le diffractogramme (a) correspondant à la composition présentant une fraction massique d'iodure de potassium de 20%, le diffractogramme (b) correspondant à celle présentant une fraction massique d'iodure de potassium de 40%, et le diffractogramme (c) correspondant à celle présentant une fraction massique d'iodure de potassium de 60%.

La figure 5 illustre, elle, les diffractogrammes enregistrés pour les compositions renfermant de l'urée, le diffractogramme (d) correspondant à la composition présentant une fraction massique d'urée de 20%, le diffractogramme (e) correspondant à celle présentant une fraction massique d'urée de 40%, et le diffractogramme (f) correspondant à celle présentant une fraction massique d'urée de 60%.

Ces figures montrent que l'iodure de potassium et l'urée ne sont pas cristallisés et se trouvent dispersés dans la matrice d'amidon à l'état d'entités élémentaires lorsqu'ils sont utilisés dans des fractions massiques faibles (diffractogrammes (a) de la figure 4 et (d) de la figure 5). Par contre, les compositions les plus riches en iodure de potassium ou en urée sont formées de cristallites élémentaires dont la taille moyenne est de 35 à 50 nm (diffractogrammes (b) et (c) de la figure 4, et diffractogrammes (e) et (f) de la figure 5).

La microscopie électronique à balayage associée à l'analyse élémentaire par spectroscopie d'énergie dispersive (EDS) montre que l'iodure de potassium et l'urée sont répartis de manière homogène dans les deux types de compositions.

Seule la composition la plus riche en iodure de potassium (KI = 60%) contient des nanoparticules de tailles assez importantes pour être observées au microscope électronique à balayage. Ces particules ont une forme allongée (Φ ≈ 200 nm ; longueur ≈ 100 - 700 nm).

Les nanoparticules d'urée sont, elles, difficilement observables, même dans la composition ayant la plus forte teneur en urée. Elles ne paraissent pas présenter d'anisotropie (Φ ≈ 50 nm).

Pour l'iodure de potassium comme pour l'urée, la croissance de particules micrométriques en dehors de la matrice d'amidon n'a pas été mise en évidence. Cette observation peut être reliée au fait que les solubilités dans l'eau de l'iodure de potassium et de l'urée sont nettement plus élevées que celle du chlorure de sodium.

### Exemple 3 : Dispersion de nitrate d'ammonium

Un protocole opératoire analogue à celui décrit dans l'exemple 1, point 1, ci-avant peut également être utilisé pour nanostructurer un oxydant tel que le nitrate d'ammonium (NH₄NO₃, noté NA) dans une matrice d'amidon. Compte tenu de la nature réductrice de l'amidon, on obtient ainsi une composition énergétique.

Ainsi, par exemple, on prépare trois compositions énergétiques en procédant comme décrit dans l'exemple 1, point 1, mais en utilisant des quantités d'amidon, de nitrate d'ammonium et d'eau permettant d'obtenir des fractions massiques de nitrate d'ammonium respectivement de 60%, 73% et 84%. Ces fractions massiques ont été choisies de telle sorte que les compositions renferment des quantités d'oxygène suffisantes pour qu'une réaction énergétique puisse se produire.

Les compositions ainsi obtenues sont soumises à une observation au MEB d'une part, et à une analyse par DSC (Differential Scanning Calorimetry) d'autre part.

La DSC est une mesure du flux de chaleur absorbé ou émis par un matériau soumis à une sollicitation thermique. Elle permet de mettre en évidence des transformations physiques telles que les transitions solide → solide, la fusion ou l'évaporation, ou des transformations chimiques telles que la thermolyse, l'oxydation ou la dégradation énergétique, d'un matériau. Dans le cas présent, elle est utilisée pour évaluer quantitativement la température de fusion du nitrate d'ammonium et les énergies associées à la décomposition des compositions énergétiques.

L'observation au MEB des deux compositions les plus riches en nitrate d'ammonium (NA = 73% et 84%) montre qu'elles ne comportent pas de cristaux micrométriques de nitrate d'ammonium.

L'analyse par DSC montre, elle, que la proportion de nitrate d'ammonium cristallisé présent dans les compositions obtenues selon l'invention chute avec la teneur massique en nitrate d'ammonium de ces compositions. Ainsi, dans une composition contenant 60% en masse de nitrate d'ammonium, seulement 66% de ce nitrate est cristallisé. En revanche, dans une composition riche en nitrate d'ammonium (à fraction massique de NA ≥ 84%), la totalité du nitrate d'ammonium est cristallisée.

Ce phénomène n'est naturellement pas observé avec un mélange de poudres de nitrate d'ammonium et d'amidon de granulométrie classique, c'est-à-dire présentant des particules de granulométrie moyenne comprise entre 40 et 200 µm pour la poudre de nitrate d'ammonium et d'environ 350 µm pour la poudre d'amidon.

Par ailleurs, comme le montre le tableau 1, la nanostructuration du nitrate d'ammonium induit également une diminution substantielle de sa température de fusion par rapport à la température de fusion qu'il présente dans des compositions de granulométrie classique. Cette diminution est d'autant plus marquée que la teneur en nitrate d'ammonium des compositions est faible.

**TABLEAU 1**

| | Fraction massique de NA | 84% | 73% | 60% |
|---|---|---|---|---|
| Température de fusion du NA (°C) | Compositions obtenues selon l'invention | 165,6 | 162,5 | 158,9 |
| | Compositions de granulométrie classique | 168,0 | 167,5 | - |

### Exemple 4 : Dispersion de perchlorate d'ammonium

La dispersion de perchlorate d'ammonium (NH₄ClO₄, noté PA), qui se décompose sans fusion préalable, dans une matrice d'amidon a été choisie pour apprécier l'incidence de la nanostructuration sur les propriétés énergétiques de compositions énergétiques.

Pour ce faire, trois compositions sont préparées en procédant comme décrit dans l'exemple 1, point 1, ci-avant, mais en utilisant des quantités d'amidon, de perchlorate d'ammonium et d'eau permettant d'obtenir des rapports massiques PA/amidon respectivement de 54/46, 61/39 et 76/24.

Des compositions formées de mélanges de poudres de perchlorate d'ammonium et d'amidon de granulométrie classique (PA : Φ ≈ 400 µm ; amidon : Φ ≈ 350 µm) sont élaborées en parallèle afin de comparer leurs propriétés énergétiques à celles des compositions obtenues selon l'invention.

L'étude comparative des caractéristiques énergétiques des deux types de compositions est réalisée par DSC (Differential Scanning Calorimetry) et au mouton de choc.

Là également, la DSC est utilisée pour évaluer quantitativement la température de fusion du perchlorate d'ammonium et les énergies associées à la décomposition des compositions énergétiques. E_{D} correspond à l'intégration dans le temps de l'exotherme de décomposition.

La méthode du mouton de choc est, elle, classiquement employée pour déterminer les sensibilités à l'impact des explosifs. Elle consiste à mesurer la hauteur de chute d'un marteau de masse donnée qui initie un phénomène pyrotechnique dans 50% des cas (H₅₀). La pression maximale (Pₘₐₓ) générée par la décomposition énergétique peut être déterminée en instrumentant la chambre d'impact avec un capteur de pression.

Les résultats obtenus sont présentés dans le tableau 2 ci-après.

**TABLEAU 2**

| | Compositions obtenues selon l'invention | | | Compositions de granulométrie classique | | |
|---|---|---|---|---|---|---|
| | DSC | Mouton de choc | | DSC | Mouton de choc | |
| % PA | E_{D} | H₅₀ | Pₘₐₓ | E_{D} | H₅₀ | Pₘₐₓ |
| | (J/g) | (mm) | (bar) | (J/g) | (mm) | (bar) |
| 100 | - | - | - | 720 | 522 | 0,60 |
| 76 | 2400 | 407 | 2,19 | 1689 | 395 | 1,50 |
| 61 | 3230 | 380 | 1,80 | 1936 | 411 | 1,37 |
| 54 | 3150 | 314 | 1,51 | 2120 | 373 | 1,00 |

Comme le montre ce tableau, la décomposition des compositions obtenues selon l'invention produit des énergies et des pressions notablement supérieures à celles produites par les compositions de granulométrie classique.

En outre, la nanostructuration du perchlorate d'ammonium ne semble pas accroître de manière significative la sensibilité à l'impact des compositions.

### REFERENCES CITEES

[1] Brevet américain n° 4,758,289
[2] Demande internationale PCT WO 99/12870
[3] Kirk-Othmer Concise Encyclopedia of Chemical Technology, 1985, Wiley-Interscience
[4] Arnaudov et al., Analytical Laboratory, 7:2, 70-84, 1998
[5] Montemayor et al., Materials Letters, 59, 1056-1060, 2000

## Revendications

1. Procédé de fabrication d'une composition énergétique, utile notamment comme explosif ou propergol, comprenant des nanoparticules d'au moins un élément ou composé chimique dispersées dans une matrice organique, **caractérisé en ce qu'**il comprend les étapes suivantes :
a) mélanger l'élément ou composé chimique et au moins un polymère organique dans un solvant dans lequel cet élément ou composé chimique et ce polymère organique sont tous les deux solubles, pour obtenir une solution vraie ou une solution colloïdale contenant à la fois ledit élément ou composé chimique et ledit polymère organique ; puis
b) éliminer le solvant de ladite solution vraie ou colloïdale.

2. Procédé selon la revendication 1, **caractérisé en ce que** le solvant est de l'eau, un solvant organique, un mélange d'eau et d'un solvant organique miscible à l'eau ou encore un mélange de solvants organiques miscibles entre eux.

3. Procédé selon la revendication 1 ou la revendication 2, **caractérisé en ce que** le polymère organique est un polymère naturel ou de synthèse.

4. Procédé selon la revendication 3, **caractérisé en ce que** le polymère organique est choisi parmi les polysaccharides et les polymères dérivés des polysaccharides, les protéines et les polymères dérivés des protéines, les polymères solubles dans l'eau autres que polysaccharidiques et protéiques, les résines solubles dans l'eau et les polymères thermoplastiques solubles dans les solvants organiques.

5. Procédé selon la revendication 4, **caractérisé en ce que** le polymère organique est un polysaccharide.

6. Procédé selon la revendication 5, **caractérisé en ce que** le polymère organique est un amidon et, de préférence, un amidon formant une solution colloïdale avec l'eau.

7. Procédé selon la revendication 4, **caractérisé en ce que** le polymère organique est un polymère résultant de l'estérification de l'acide citrique par l'éthylène glycol.

8. Procédé selon l'une quelconque des revendications précédentes, **caractérisé en ce que** le mélange de l'élément ou composé chimique et du polymère organique dans le solvant est réalisé :
- en dissolvant le polymère organique dans le solvant ; puis
- en ajoutant, à la solution ainsi obtenue, l'élément ou composé chimique, éventuellement en solution dans ledit solvant.

9. Procédé selon l'une quelconque des revendications précédentes, **caractérisé en ce que** l'élimination du solvant est réalisée par évaporation et, de préférence, par évaporation sous vide.

10. Procédé selon l'une quelconque des revendications précédentes, **caractérisé en ce que** la fraction massique de l'élément ou composé chimique dans la composition est comprise dans la gamme allant de 5% à 95%.

11. Procédé selon l'une quelconque des revendications précédentes, **caractérisé en ce que** l'élément ou composé chimique est un agent oxydant et le polymère organique est un agent réducteur.

12. Procédé selon la revendication 11, **caractérisé en ce que** l'agent oxydant est choisi parmi les sels métalliques, organiques et organométalliques d'espèces oxydantes comme les composés oxygénés de l'azote, les composés oxygénés des halogènes, les composés oxygénés du chrome et du manganèse, et parmi les peroxydes organiques et inorganiques.

13. Procédé selon la revendication 11 ou la revendication 12, **caractérisé en ce que** l'agent oxydant est du nitrate d'ammonium ou du perchlorate d'ammonium.

14. Procédé selon l'une quelconque des revendications 11 à 13, **caractérisé en ce que** l'agent réducteur est un polysaccharide.

15. Procédé selon la revendication 14, **caractérisé en ce que** l'agent réducteur est un amidon et, de préférence, un amidon formant une solution colloïdale avec l'eau.

16. Procédé selon l'une quelconque des revendications 11 à 13, **caractérisé en ce que** l'agent réducteur est un polymère résultant de l'estérification de l'acide citrique par l'éthylène glycol.

17. Procédé selon l'une quelconque des revendications précédentes, **caractérisé en ce que** la composition énergétique est un explosif.
